# EUROPÄISCHE PATENTSCHRIFT

(11) **EP 1 767 899 B1**
(45) Veröffentlichungstag und Bekanntmachung des Hinweises auf die Patenterteilung: **18.08.2010**
(21) Anmeldenummer: 06019842.1
(22) Anmeldetag: 22.09.2006
(51) Int. Cl.: G01C 15/00

(54) **Messanordnung**
Measuring apparatus
Dispositif de mesure

(30) Priorität: 27.09.2005 DE 202005015263 U
(43) Veröffentlichungstag der Anmeldung: 28.03.2007
(73) Patentinhaber: Stabila Messgeräte Gustav Ullrich GmbH, 76855 Annweiler (DE)
(72) Erfinder: Kallabis, Gabriel, 76848 Spirkelbach (DE)
(74) Vertreter: Stoffregen, Hans-Herbert

(56) Entgegenhaltungen:
- EP-A- 1 024 344
- US-A1- 2004 093 748

## Beschreibung

Die Erfindung bezieht sich auf eine Messanordnung umfassend ein Messgerät wie Lasermessgerät mit einem Gehäuse, das lösbar mit einem Stativ verbunden ist, das seinerseits einen Stativkopf und von diesem ausgehende längenveränderbare und über Schwenk- oder Kippgelenke verschwenkbare Stativbeine aufweist, die jeweils aus teleskopartig zueinander verschiebbarem Innen- und Außenrohr bestehen, die über ein Feststellelement wie Überwurfmutter in gewünschter Position zueinander fixierbar sind.

Um an Bauwerken, z.B. auf Decken oder Wänden, horizontale oder vertikale Linien oder in Räumen entsprechend verlaufende Ebenen genau festzulegen, können Baulasergeräte benutzt werden. Entsprechende Baulaser weisen in einem Gehäuse angeordnete Laser auf, um Licht zum Erzeugen von Linien und Punkten zu emittieren. Dabei kann gegebenenfalls der Laserstrahl z.B. mittels eines Prismas rotierend abgestrahlt werden.

In Baubereichen eingesetzte Messgeräte wie entsprechende Laser können auf einem Stativ, und zwar auf dessen Stativkopf befestigt werden, von dem Stativbeine ausgehen, die zu dem Stativkopf grundsätzlich verschwenkbar sind. Üblicherweise gehen drei Stativbeine von dem Stativkopf aus, um eine sichere Aufstellung zu ermöglichen. Unabhängig hiervon kann die Höhe des Geräts in einem Umfang verstellt werden, wie dies durch die Längenveränderung der Stativbeine und deren Anordnung zueinander ermöglicht wird.

Um in nahezu jeder gewünschten Höhe in einem Raum eine optische Markierung vorzunehmen, ist es bekannt, einen Laser an zwischen Boden und Decke eines Raumes aufgestellter Klemmstange zu befestigen.

Nach der US-B-6,804,893 wird ein Lasermesssystem vorgeschlagen, das eine zwischen Boden und Decke eines Raums verlaufende und zwischen diesen klemmbare längenveränderbare Klemmstange umfasst, die aus teleskopartig zueinander verstellbaren Rohren besteht. Entlang der Klemmstange ist ein Lasermessgerät verstellbar und in einer gewünschten Position fixierbar. Gleiche Systeme sind der JP-A-2005-049201 und der US-B-6,256,895 zu entnehmen. Dabei kann auch ein Abstützen in einem Türrahmen erfolgen.

Die DE-A-198 42 966 bezieht sich auf eine Einrichtung zur satellitengestützten Vermessung. Dabei ist eine Satellitenantenne auf einem Antennenträger befestigt, der aus miteinander verschraubbaren Rohren zusammengesetzt ist.

Der vorliegenden Erfindung liegt die Aufgabe zugrunde, eine Messanordnung der eingangs genannten Art so weiterzubilden, dass das Messgerät in einem Raum in gewünschter Höhe unabhängig von der Länge eines jeden Stativbeins mit konstruktiv einfachen Maßnahmen positionierbar ist.

Zur Lösung der Aufgabe sieht die Erfindung im Wesentlichen vor, dass zumindest zwei der Stativbeine zu einer längenveränderbaren zwischen zwei zueinander beabstandet verlaufenden Begrenzungen z. B. eines Raums klemmbaren Haltestange zusammensetzbar sind, wobei insbesondere die Haltestange mit einem Ende von dem auf einer der Begrenzungen abgestützten Stativkopf ausgeht und das Gehäuse des Messgeräts entlang der Haltestange verstellbar und an dieser in gewünschter Position fixierbar ist.

Abweichend vom vorbekannten Stand der Technik wird keine gesonderte Klemmstange benutzt, um ein Messgerät in gewünschter Position eines Raums zu positionieren. Vielmehr werden erfindungsgemäß die Stativbeine selbst derart zusammengesetzt, dass entlang der aus den Stativbeinen gebildeten Halte- oder Klemmstange das Messgerät in gewünschter Position fixierbar ist. Hierzu wird das Messgerätgehäuse benutzt, das vorzugsweise integral ein entsprechendes Fixier- wie Klemmelement aufweist. Selbstverständlich bestünde auch die Möglichkeit, einen Adapter zu verwenden, der einerseits mit dem Messgerät und andererseits mit der Halte- oder Klemmstange verbindbar ist. Andere Verbindungsmittel wie Federklammer oder Schraubzwingenelement sind gleichfalls denkbar.

Dadurch, dass die Haltestange von dem insbesondere auf dem Boden des Raums liegenden Stativkopf ausgeht, ist ein problemloses Ausrichten und Fixieren der Klemm- oder Haltestange möglich.

Insbesondere sieht die Erfindung vor, dass die mit dem Stativkopf über die Kipp- bzw. Schwenkgelenke verbundenen Stativbeine zur Ausbildung der Haltestange aus den Kipp- oder Schwenkgelenken entfernt sind und dass der Stativkopf eine Aufnahme wie mittig verlaufende Vertiefung für das von dem Stativkopf ausgehende Stativbein der Haltestange aufweist.

Jedes Stativbein besteht insbesondere zumindest aus einem Innenrohr und einem dieses zumindest bereichsweise aufnehmenden Außenrohr, wobei bei zu der Haltestange zusammengesetzten Stativbeinen ein Innenrohr eines ersten Stativbeins bereichsweise in einem Außenrohr eines zweiten Stativbeins verläuft. Dabei kann das Innenrohr des ersten Stativbeins in dem Außenrohr des zweiten Stativbeins über ein Fixierelement wie Spannelemente oder von dem Außenrohr ausgehende Überwurfmutter fixierbar sein.

Um ein sicheres Festklemmen der Haltestange zwischen den Begrenzungen, bei denen es sich insbesondere um den Boden und die Decke eines Raums handelt, zu ermöglichen, ohne dass eine exakte Anpassung der Gesamtlänge der zusammengesetzten Stativbeine erforderlich ist, schlägt die Erfindung des Weiteren vor, dass von dem begrenzungsseitigen und von dem Stativkopf entfernt verlaufenden Stativbein ein federkraftbeaufschlagtes Klemmelement ausgeht. Hierbei handelt es sich insbesondere um ein von endseitig verlaufendem Rohr wie Außenrohr des begrenzungsseitig verlaufenden Stativbeins ausgehendes und zu diesem frei verstellbares Rohr- oder Stabelement, das von einem Federelement wie einer Schraubenfeder umgeben ist und sich einerseits an dem Außenrohr und andererseits an dem Rohr- bzw. Stabelement abstützt. Hierdurch kann das Rohr- bzw. Stabelement axial verstellt werden, wobei eine über das Federelement nach außen gerichtete Kraft auf das Rohr- bzw. Stabelement einwirkt. Eine entsprechende Spannkraft kann auch dadurch erzeugt werden, dass ein Federelement innerhalb des Rohr- bzw. Stabelementes verläuft und sich an dem Außenrohr abstützt.

Alternativ kann das Rohr- oder Stabelement auch in Art einer Spindel zu dem Außenrohr verstellbar sein, um eine Längenanpassung vorzunehmen.

Ferner kann ein entsprechendes die Funktion eines Ausgleichselements ausübenden Klemmelementes auch oder alternativ von bodenseitig verlaufendem Stativbein ausgehen.

Andere Konstruktionen, um einen Längenausgleich und ein entsprechendes Feststellen der Haltestange auf einfache Weise sicherzustellen, sind gleichfalls möglich.

Um ein einfaches Fixieren des Messgeräts an der Halte- bzw. Klemmstange zu ermöglichen, ist vorgesehen, dass das Gehäuse des Messgeräts eine außenseitig und in dessen Längsachsenrichtung verlaufende rinnen- oder kanalförmige Aufnahme für die Haltestange aufweist. Dabei können von der Außenseite des Gehäuses radial abragende und zueinander beabstandete Abschnitte mit parallel oder in etwa parallel zueinander verlaufenden einander zugewandten Begrenzungsflächen ausgehen, die Begrenzungen der rinnen- bzw. kanalförmigen Aufnahme bilden. Die Abschnitte müssen jedoch nicht zwingend seitlich über das Gehäuse vorstehen.

Die rinnen- bzw. kanalförmige Aufnahme für die Haltestange kann öffnungsseitig durch ein oder zwei vorzugsweise federkraftbeaufschlagte Klemmelemente verschließbar sein. Dabei geht das Klemmelement bzw. gehen die Klemmelemente von den seitlichen Abschnitten aus.

Nach einer Ausführungsform kann ein Klemmelement als Bogenelement wie Hohlzylinderwandabschnitt ausgebildet sein, das um eine innerhalb der kanalartigen Aufnahme verlaufende Achse verschwenkbar ist. Um das Klemmelement zum Freigeben der kanalartigen Aufnahme verschwenken zu können, sollte von dem Klemmelement ein Griff abragen, der den das Klemmelement geführt aufnehmenden Abschnitt des Gehäuses durchsetzt. Dabei kann der Griff innerhalb einer fensterförmigen Aussparung des Abschnitts verlaufen.

Bevorzugterweise gehen von jedem der die rinnen- bzw. kanalförmige Aufnahme begrenzenden Gehäuseabschnitte federbeaufschlagte Klemmelemente wie Backen aus, die in gewünschter Position fixierbar sind. Hierzu können die Backen jeweils in einer Außenfläche eine Verzahnung wie Schrägverzahnung aufweisen, in die ein Fixierelement wie Hebel eingreift.

Selbstverständlich besteht auch die Möglichkeit, das Gehäuse in anderer Art und Weise mit der Halte- bzw. Klemmstange zu verbinden. Beispielhaft kann eine Federklammer oder Schraubzwingenelement zum Fixieren des Gehäuses benutzt werden.

Weitere Einzelheiten, Vorteile und Merkmale der Erfindung ergeben sich nicht nur aus den Ansprüchen, den diesen zu entnehmenden Merkmalen - für sich und/oder in Kombination - sondern auch aus der nachfolgenden Beschreibung eines der Zeichnung zu entnehmenden bevorzugten Ausführungsbeispiels.

Es zeigen:
- Fig. 1: ein mit einem Stativ verbundenes Messgerät,
- Fig. 2: eine zwischen Boden und Decke eines Raums festklemmbare aus den Stativbeinen des Stativs gem. Fig. 1 zusammengesetzte Haltestange,
- Fig. 3: eine perspektivische Darstellung des Gehäuses des Messgeräts gem. Fig. 1,
- Fig. 4: ein Stativkopf, teilweise weggebrochen, und
- Fig. 5: eine Draufsicht einer bevorzugten Ausführungsform eines Messgerätegehäuses.

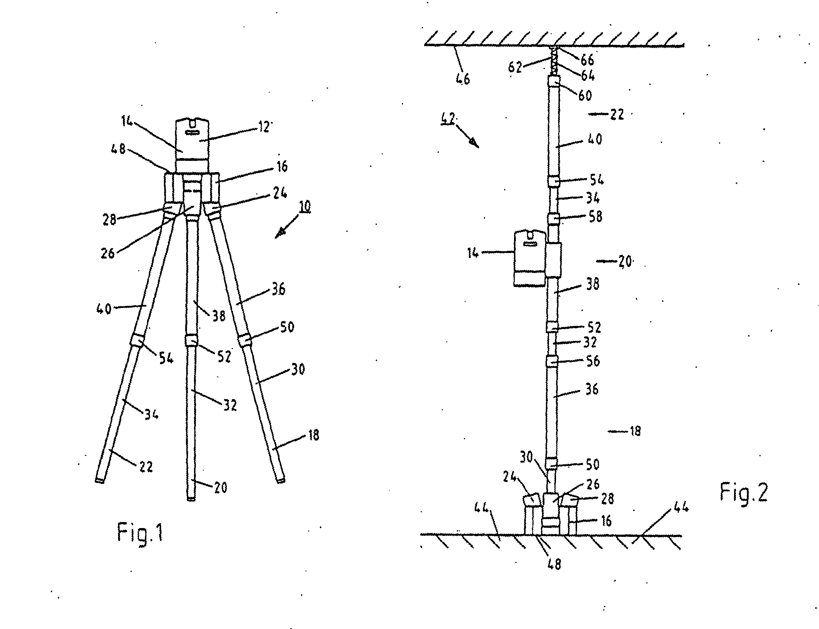

In Fig. 1 ist rein prinzipiell ein von einem Stativ 10 ausgehendes Messgerät 12 wie Lasermessgerät mit einem Gehäuse 14 dargestellt. Das Gehäuse 14 ist lösbar mit einem Stativkopf 16 verbunden. Von dem Stativkopf 16 gehen Stativbeine 18, 20, 22 aus, die mit dem Stativkopf 16 über Kipp- oder Schwenkgelenke 24, 26, 28 lösbar verbunden sind. Jeder Stativfuß 18, 20, 22 weist ein Innenrohr 30, 32, 34 auf, das zu einem von dem Kippgelenk 24, 26, 28 ausgehenden Außenrohr 36, 38, 40 teleskopförmig verschiebbar ist, um die Höhe des Stativs 10 und damit die Position des Messgeräts 12 einzustellen. Zum Fixieren des Innen- zu dem Außenrohr 12, 14, 16, 18, 20 sind Überwurfmuttern 50, 52, 54 vorgesehen, die von dem Außenrohr 36, 38, 40 ausgehen.

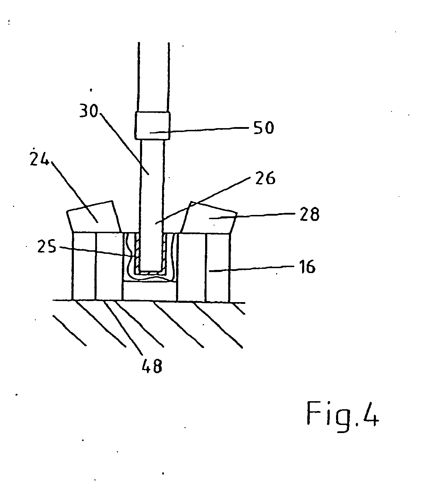

Die maximale Höhe des Messgeräts 12 ist von der Länge der Stativbeine 18, 20, 22 und deren Standposition abhängig. Um jedoch in einem Raum in gewünschter Höhenposition das Messgerät 12 anordnen zu können, ist erfindungsgemäß vorgesehen, dass die Stativbeine 18, 20, 22 zu einer Klemm- oder Haltestange 42 zusammengesetzt werden, die z. B. zwischen einem Boden 44 und einer Decke 46 des Raums oder in einem Türrahmen festklemmbar ist. Hierzu werden die Stativbeine 18, 20, 22 aus den Kippgelenken 24, 26, 28 entfernt. Sodann wird der Stativkopf 16 mit seiner oberen Seite 48, von der das Gehäuse 14 des Messgeräts 12 ausgeht, auf dem Boden 44 positioniert. Mittig weist der Stativkopf 16 eine Vertiefung 25 auf, in die eines der Stativbeine 18, 20, 22 einsetzbar ist. In der Fig. 4 ist dies das Stativbein 18 mit seinem Innenrohr 30.

In dem zum Stativkopf 16 fernliegenden Ende des das Innenrohr 30 aufnehmenden Außenrohrs 36 wird sodann das Innenrohr 32 des Stativfußes 20 eingesetzt, wobei ein Fixieren von Innenrohr und Außenrohr über eine der erwähnten Überwurfmuttern 50, 52, 54, 56, 58, 60 bzw. über weitere von dem Außenrohr 36, 38, 40 ausgehende Überwurfmutter erfolgen kann.

Das Außenrohr 38 des Stativbeins 20 nimmt wiederum das Innenrohr 34 des Stativbeins 22 auf. In das Außenrohr 40 des Stativbeins 22 wird sodann ein federvorgespanntes Rohr- oder Stabelement 62 eingesetzt, das zu dem Außenrohr 40 axial verstellbar ist. Dabei ist das Rohr- oder Stabelement 62 von einem Federelement wie Schraubenfeder 64 umgeben, das sich einerseits am Stirnbereich des Außenrohrs 40 bzw. der Überwurfmutter 60 und andererseits an einer radial sich erstreckenden Abstützplatte oder Endkappe 66 des Rohr- bzw. Stabelements 64 abstützt, wodurch letzteres eine nach außen gerichtete Federkraftbeaufschlagung erfährt. Durch diese Maßnahmen ist auf einfache Weise die Halte- oder Klemmstange 42 zwischen Begrenzungsflächen wie dem Boden 44 und der Decke 46 fixierbar, ohne dass eine passgenaue Längenausrichtung der zu der Klemm- oder Haltestange 42 zusammengesetzten Stativbeine 18, 20, 22 bzw. deren Innen- und Außenrohre 30, 32, 34, 36, 38, 40 erforderlich ist.

Selbstverständlich kann das Federelement 64 auch innerhalb des Rohrelementes 62 verlaufen, um dieses gegenüber dem Außenrohr 40 nach außen zu drücken.

Ist die Klemm- oder Haltestange 42 bodenseitig vorzugsweise auf dem Stativkopf 16 abgestützt, so ist dies kein zwingendes Merkmal. Vielmehr kann das Innenrohr 30 auch unmittelbar vom Boden 48 ausgehen.

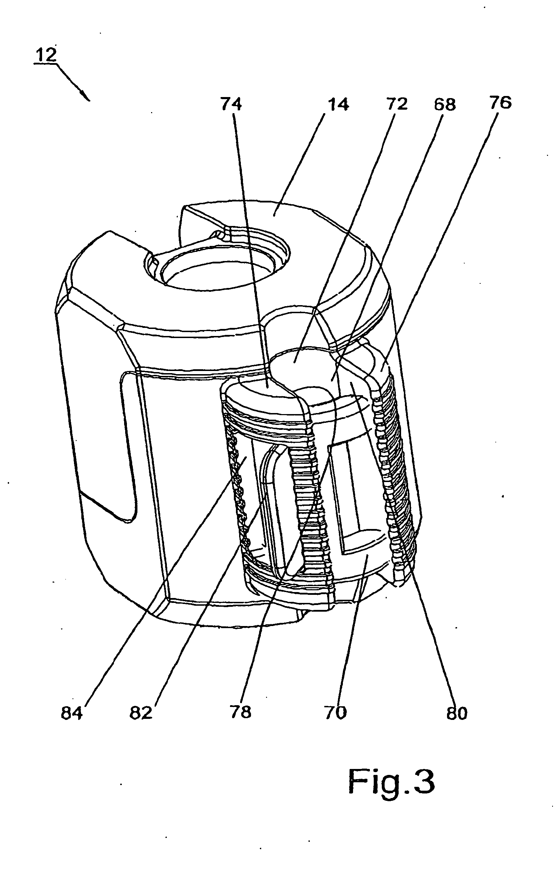

Um das Gehäuse 14 des Messgeräts 12 in gewünschter Position entlang der Halte- bzw. Klemmstange 42 zu positionieren, weist das Gehäuse 14 nach der Ausführungsform der Figur 3 eine integrierte die Halte- bzw. Klemmstange 42 aufnehmende rinnen- oder kanalförmige Aufnahme 68 sowie ein diese außenseitig verschließbares Klemmelement 70 auf.

Die kanalförmige Aufnahme 68 wird von einer rinnenförmigen von der Außenseite des Gehäuses 14 und in dessen Längsachsenrichtung verlaufenden Vertiefung 72 sowie von von dem Gehäuse 14 radial abragenden Abschnitten 74, 76 gebildet, deren zueinander beabstandeten und parallel zueinander verlaufenden Innenflächen 78, 80 in die rinnenförmige Vertiefung 72 bündig übergehen. Die lichte Breite der kanalförmigen Aufnahme 68 ist dabei an den maximalen Außendurchmesser eines Abschnitts der Stativbeine 18, 20, 22 ausgelegt.

Öffnungsseitig ist die kanalförmige Aufnahme 68 von dem Klemmelement 70 verschließbar, bei dem es sich um ein bogenförmiges Element wie Hohlzylinderwandabschnitt handelt, das um eine Achse schwenkbar ist, die parallel zur Längsachse des Gehäuses 72 und innerhalb der kanalförmigen Aufnahme 68 verläuft. Dabei ist das Klemmelement 70 federkraftbeaufschlagt derart, dass dieses automatisch in Schließstellung verschwenkt wird. In dieser Stellung wird bei in die Aufnahme 68 eingebrachter Klemm- oder Haltestange 42 diese unabhängig von dem Durchmesser des in der kanalförmigen Aufnahme 68 verlaufenden Abschnitts festgeklemmt. Um ein Verschwenken des Klemmelements 70 zu ermöglichen, ragt von diesem ein platten- oder stegförmiger als Handhabe oder Griff dienender Abschnitt 82 radial ab, der im Ausführungsbeispiel den Abschnitt 74 des Gehäuses 14 durchsetzt. Hierzu ist in dem Abschnitt 74 eine fensterförmige Aussparung 84 vorgesehen.

Ist zum Fixieren des Gehäuses 14 vorzugsweise vorgesehen, dass dieses das Klemmelement 70 als integralen Bestandteil umfasst, so kann selbstverständlich auch ein Adapter benutzt werden, über den das Gehäuse 14 mit der Halte- bzw. Klemmstange 42 verbindbar und in gewünschter Position fixierbar ist.

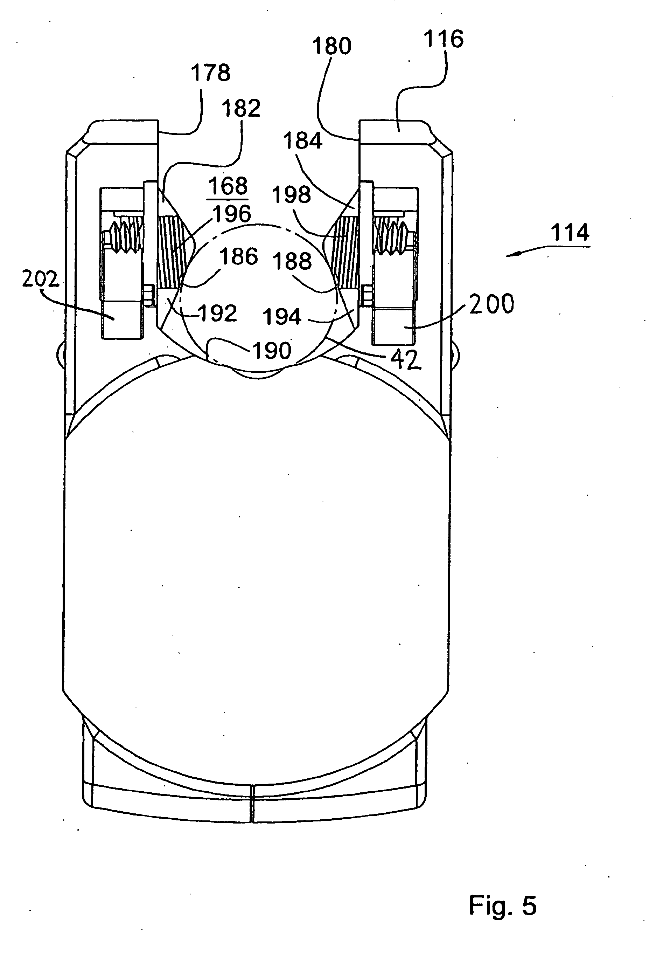

Der Fig. 5 ist eine bevorzugte Ausführungsform zum Fixieren eines Messgerätes an der Haltestange 42 zu entnehmen. Dargestellt ist eine Draufsicht eines Messgerätegehäuses 114, das eine Quadergeometrie zeigt. Von einer Schmalseite 160 geht eine rinnen- oder kanalförmige Aufnahme 168 aus, die zum Befestigen des Messgerätes von der Haltestange 42 durchsetzt wird. Zum Fixieren des Messgerätes an der Haltestange 42 gehen von den Seitenbegrenzungen 178, 180 der Aufnahme 168 federkraftbeaufschlagte Backen 182, 184 aus, die in die Aufnahme 168 hineinverstellbar sind, um die Haltestange 42 zwischen schräg verlaufenden Begrenzungsflächen 186, 188 der Backen 182, 184 und der Bodenfläche 190 der Aufnahme 168 festklemmen zu können.

Damit die Backen 182, 184 in ihrer die Haltestange 42 klemmenden Position fixierbar sind, gehen im Ausführungsbeispiel von der jeweils senkrecht zu den Klemmflächen 168, 188 verlaufenden Außenfläche 192, 194 der Klemmbacke 182 bzw. 184 Schrägverzahnungen 196, 198 aus, in die dargestellte Fixierelemente wie Hebel 200, 202 eingreifen, um ein Verstellen der Klemmbacken 182, 184 auszuschließen.

## Patentansprüche

1. Messanordnung, umfassend ein Messgerät (12), wie Lasermessgerät, mit einem Gehäuse (14, 114), das lösbar mit einem Stativ (10) verbindbar ist, das einen Stativkopf (16) und von diesem ausgehende längenveränderbare und über Schwenk- oder Kippgelenke (24, 26, 28) verschwenkbare Stativbeine (18, 20, 22) aufweist, die ihrerseits jeweils aus teleskopartig zueinander verschiebbarem Innen- und Außenrohr (30, 36; 32, 38; 34, 40) bestehen, die über ein Feststellelement wie Überwurfmutter (50, 52, 54) in gewünschter Position zueinander fixierbar sind,
**dadurch gekennzeichnet,**
**dass** zumindest zwei der Stativbeine (18, 20, 22) zu einer längenveränderbaren zwischen zwei zueinander beabstandet verlaufenden Begrenzungen (44, 46) klemmbaren Haltestange (42) zusammensetzbar sind.

2. Messanordnung nach Anspruch 1,
**dadurch gekennzeichnet,**
**dass** die Haltestange (42) mit einem Ende von dem auf einer der Begrenzungen abgestützten Stativkopf (16) ausgeht und dass das Gehäuse (14) des Messgeräts (12) entlang der Haltestange verstellbar und an dieser in gewünschter Position fixierbar ist.

3. Messanordnung nach Anspruch 1 oder 2,
**dadurch gekennzeichnet,**
**dass** die mit dem Stativkopf (16) über die Kipp- bzw. Schwenkgelenke (24, 26, 28) verbundenen Stativbeine (18, 20, 22) zur Ausbildung der Haltestange (42) aus den Kipp- oder Schwenkgelenken entfernt sind und dass der Stativkopf eine Aufnahme (25) wie mittig verlaufende Vertiefung für das von dem Stativkopf ausgehende Stativbein (18) der Haltestange (42) aufweist.

4. Messanordnung nach zumindest einem der vorhergehenden Ansprüche,
**dadurch gekennzeichnet,**
**dass** bei zu der Haltestange (42) zusammengesetzten Stativbeinen (18, 20, 22) ein Innenrohr (32) eines ersten Stativbeins (20) bereichsweise in einem Außenrohr (36) eines zweiten Stativbeins (18) verläuft, wobei vorzugsweise das Innenrohr (32) des ersten Stativbeins (20) in dem Außenrohr (36) des zweiten Stativbeins (18) über ein Fixierelement wie Spannelement oder von dem Außenrohr ausgehende überwurfmutter (56) fixierbar ist.

5. Messanordnung nach zumindest einem der vorhergehenden Ansprüche,
**dadurch gekennzeichnet,**
**dass** von dem begrenzungsseitig und zu dem Stativkopf (16) entfernt verlaufendem Stativbein (22) ein längenverstellbares Klemmelement ausgeht.

6. Messanordnung nach Anspruch 5,
**dadurch gekennzeichnet,**
**dass** das Klemmelement ein von endseitig verlaufendem Rohr wie Außenrohr (40) des begrenzungsseitig verlaufenden Stativbeines (22) ausgehendes und zu diesem frei verstellbares Rohr- oder Stabelement (62) aufweist, dass ein Federelement (64) wie eine Schraubenfeder das Rohr- oder Stabelement umgibt oder innerhalb von diesem verläuft und dass sich das Federelement einerseits an dem endseitig verlaufenden Rohr und andererseits dem Rohr- bzw. Stabelement bzw. einem endseitig von diesem ausgehenden Abschnittselement (66) abstützt.

7. Messanordnung nach zumindest Anspruch 5,
**dadurch gekennzeichnet,**
**dass** das Klemmelement wie Rohr- oder Stabelement (62) zur relativen Längenveränderung zu dem Außenrohr (40) drehbar ist.

8. Messanordnung nach zumindest einem der vorhergehenden Ansprüche, **dadurch gekennzeichnet,**
**dass** das Gehäuse (14) des Messgeräts (12) eine von dessen Außenseite und in Längsrichtung des Gehäuses verlaufende rinnen- oder kanalförmige Aufnahme (68, 168) für einen Abschnitt der Haltestange (42) aufweist, wobei insbesondere von dem Gehäuse (14) zwei radial abragende und zueinander beabstandete Abschnitte (74, 76) mit parallel oder in etwa parallel zueinander verlaufenden und einander zugewandten Begrenzungsflächen (78, 80) ausgehen, die bündig oder im Wesentlichen bündig in die rinnenförmige Vertiefung (72) übergehen.

9. Messanordnung nach zumindest einem der vorhergehenden Ansprüche,
**dadurch gekennzeichnet,**
**dass** die Begrenzungsflächen (78, 80) und die rinnenförmige Vertiefung (72) eine kanalförmig ausgebildete Aufnahme (68) für einen Abschnitt der Haltestange (42) bilden und dass von einem der radial verlaufenden Abschnitte (74) ein verschwenkbares Klemmelement (70) ausgeht, das in Abhängigkeit seiner Stellung die kanalförmige Aufnahme (68) öffnungsseitig verschließt oder freigibt, wobei insbesondere das Klemmelement (70) ein Bogenelement wie Hohlzylinderwandabschnitt ist und um eine parallel zur Längsachse des Gehäuses (14) und im Bereich der kanalförmigen Aufnahme (68) verlaufende Achse verschwenkbar ist und/oder das Klemmelement (70) über ein Federelement in die kanalförmige Aufnahme (68) verschließende Stellung kraftbcaufschlagt ist.

10. Messanordnung nach zumindest einem der vorhergehenden Ansprüche,
**dadurch gekennzeichnet,**
**dass** von dem Klemmelement (70) eine Handhabe wie Griff (82) abragt, der den das Klemmelement geführt aufnehmenden radial abragenden Abschnitt (74) des Gehäuses (14) nach außen hin durchsetzt, wobei insbesondere die Handhabe (82) innerhalb einer fensterförmigen Aussparung (84) des Abschnitts (74) verläuft und in dieser verschwenkbar ist.

11. Messanordnung nach zumindest einem der vorhergehenden Ansprüche,
**dadurch gekennzeichnet,**
**dass** von Begrenzungen der rinnenförmigen Aufnahme (168) in diese federkraftbeaufschlagt hineinverstellbare Klemmelemente (182, 184) wie Backen ausgehen, die vorzugsweise in ihrer Stellung insbesondere durch in eine Verzahnung (196, 198) wie Schrägverzahnung eingreifende Fixierelemente wie Hebel (200, 202) fixierbar sind.

12. Messanordnung nach zumindest einem der vorhergehenden Ansprüche,
**dadurch gekennzeichnet,**
**dass** das Gehäuse (14) über ein Klemmelement wie Federklammer oder Schraubzwingenelement an der Haltestange (42) oder über einen separaten Adapter mit der Haltestange in gewünschter Position fixierbar ist.

## Claims

1. Measuring arrangement, comprising a measuring device (12), such as laser measuring device, with a housing (14, 114), which is detachably connectable to a tripod (10), comprising a tripod head (16) and, emanating therefrom, tripod legs (18, 20, 22) which are lengthwise-adjustable and pivotable by means of swivel or tilting joints (24, 26, 28) and which consist in turn of inner and outer tube (30, 36; 32, 38; 34, 40) telescopically shiftable in relation to one another and fixable in a desired position in relation to one another by means of a locking element such as a union nut (50, 52, 54),
**characterized in**
**that** at least two of the tripod legs (18, 20, 22) can be put together to form a lengthwise-adjustable, clampable supporting rod (42) extending between two boundaries (44, 46) spaced apart from one another.

2. Measuring arrangement according to claim 1,
**characterized in**
**that** the supporting rod (42) emanates with one end from the tripod head (16) resting against one of the boundaries and that the housing (14) of the measuring devices (12) can be adjusted along the supporting rod and fixed in a desired position thereon.

3. Measuring arrangement according to claim 1 or 2,
**characterized in**
**that** the tripod legs (18, 20, 22) connected to the tripod head (16) via the tilting or swivel joints (24, 26, 28) for forming the supporting rod (42) are removed from the tilting or swivel joints and that the tripod head has a receptacle (25) such as a centrally extending depression for the tripod leg (18) of the supporting rod (42) emanating from the tripod head.

4. Measuring arrangement according to at least one of the previous claims,
**characterized in**
**that**, with tripod legs (18, 20, 22) being put together for forming the supporting rod (42), an inner tube (32) of a first tripod leg (20) extends in sections in an outer tube (36) of a second tripod leg (18), with preferably the inner tube (32) of the first tripod leg (20) being fixable in the outer tube (36) of the second tripod leg (18) via a fixing element such as a clamping element or a union nut (56) emanating from the outer tube.

5. Measuring arrangement according to at least one of the previous claims,
**characterized in**
**that** a lengthwise-adjustable clamping element emanates from the tripod leg (22) running at the boundary side and spaced to the tripod head (16).

6. Measuring arrangement according to claim 5,
**characterized in**
**that** the clamping element comprises a tubular or rod element (62), emanating from an end side running tube such as the outer tube (40) of the tripod leg (22) running at the boundary side, said tubular rod element being freely adjustable in respect to the tripod leg, that a spring element (64) such as a coil spring surrounds the tubular or rod element or runs therein and that the spring element is supported by both the tube running at the far end and the tubular, respectively rod element, respectively a section element (66) emanating therefrom at the end side.

7. Measuring arrangement according to at least claim 5,
**characterized in**
**that** the clamping element such as tubular or rod element (62) is rotatable relative to the outer tube (40) for relative variation of its length.

8. Measuring arrangement according to at least one of the previous claims,
**characterized in**
**that** the housing (14) of the measuring device (12) has a groove- or channel-shaped receptacle (68, 168), said receptacle is for a section of the supporting rod (42) and extends from the outside and in longitudinal direction of the housing, whereby especially emanating from the housing (14) are two radially projecting sections (74, 76) spaced apart from one another and comprising parallel or substantially parallel boundary surfaces (78, 80), that pass flush or substantially flush into the groove-shaped depression (72).

9. Measuring arrangement according to at least one of the previous claims,
**characterized in**
**that** the boundary surfaces (78, 80) and the groove-shaped depression (72) form a channel-shaped receptacle (68) for a section of the supporting rod (42) and that from one of the radially running sections (74) is emanating a pivotable clamping element (70), which, depending on its position, closes or exposes the channel-shaped receptacle (68) at the open side, whereby especially the clamping element (70) is an arc-shaped element such as a wall segment of a hollow cylinder and is pivotable around an axis extending both parallel to the longitudinal axis of the housing (14) and in the region of the channel-shaped recess (68), and/or that via a spring element the clamping element (70) is acted upon by force into the position closing the channel-shaped recess (68).

10. Measuring arrangement according to at least one of the previous claims,
**characterized in**
**that** projecting from the clamping element (70) is a handle such as a grip (82), which outwardly penetrates the radially projecting section (74) of the housing (14) receiving the clamping element in guided fashion, whereby especially the handle (82) runs inside a window-shaped recess (84) of the section (74) and is pivotable inside the recess.

11. Measuring arrangement according to at least one of the previous claims,
**characterized in**
**that** from boundaries of the groove-shaped receptacle (168) extend clamping elements (182, 184) such as jaws which can be moved into said receptacle by being acted upon by spring force, and which can be fixed preferably in their position by fixing elements such as levers (200, 202) engaging into a toothing (196, 198) such as helical gearing.

12. Measuring arrangement according to at least one of the previous claims,
**characterized in**
**that**, via a clamping element such as spring clamp or screw clamp element, the housing (14) can be fixed at the supporting rod (42) or, via a separate adapter, with the supporting rod in desired position.

## Revendications

1. Système de mesure comprenant un appareil de mesure (12), tel qu'un appareil de mesure à laser, avec un boîtier (14, 114) qui peut être fixé de manière amovible à un trépied (10) présentant une tête de trépied (16) de laquelle partent des branches de trépied (18, 20, 22) modifiables en longueur et pivotantes grâce à des articulations pivotantes ou basculantes (24, 26, 28), lesdites branches étant respectivement constituées d'un tube intérieur et d'un tube extérieur (30, 36 ; 32, 38 ; 34, 40) mobiles l'un par rapport à l'autre de manière télescopique et pouvant être fixés les uns par rapport aux autres dans la position souhaitée au moyen d'un élément de blocage tel qu'un écrou-raccord (50, 52, 54),
**caractérisé en ce**
**qu'**au moins deux des branches de trépied (18, 20, 22) peuvent être assemblées pour former une barre de fixation (42) modifiable en longueur et pouvant être bloquée entre deux délimitations (44, 46) distantes l'une de l'autre.

2. Système de mesure selon la revendication 1,
**caractérisé en ce**
**qu'**à une extrémité, la barre de fixation (42) part de la tête de trépied (16) s'appuyant sur une des délimitations, et que le boîtier (14) de l'appareil de mesure (12) est réglable le long de la barre de fixation et peut être fixé sur celle-ci dans la position souhaitée.

3. Système de mesure selon la revendication 1 ou 2,
**caractérisé en ce**
**que** les branches de trépied (18, 20, 22) reliées à la tête de trépied (16) par les articulations pivotantes ou basculantes (24, 26, 28) sont retirées des articulations pivotantes ou basculantes afin de former la barre de fixation (42), et que la tête de trépied présente un logement (25) tel qu'un évidement central pour la branche de trépied (18) de la barre de fixation (42) partant de la tête de trépied.

4. Système de mesure selon au moins l'une des revendications précédentes,
**caractérisé en ce**
**que** dans les branches de trépied (18, 20, 22) assemblées pour former la barre de fixation (42), un tube intérieur (32) d'une première branche de trépied (20) s'étend partiellement dans un tube extérieur (36) d'une deuxième branche de trépieds (18), sachant que de préférence le tube intérieur (32) de la première branche de trépied (20) peut être fixé dans le tube extérieur (36) de la deuxième branche de trépied (18) par un élément de fixation tel qu'un élément de serrage ou un écrou-raccord (56) partant du tube extérieur.

5. Système de mesure selon au moins l'une des revendications précédentes,
**caractérisé en ce**
**qu'**un élément de calage réglable en longueur part de la branche de trépied (22) s'étendant du côté de la délimitation et éloignée de la tête de trépied (16).

6. Système de mesure selon la revendication 5,
**caractérisé en ce**
**que** l'élément de calage présente un élément en forme de tube ou de barre (62) partant d'un tube terminal tel que le tube extérieur (40) de la branche de trépied (22) s'étendant du côté de la délimitation, et librement réglable par rapport à celui-ci, qu'un élément élastique (64) tel qu'un ressort cylindrique entoure l'élément en forme de tube ou de barre ou s'étend à l'intérieur de celui-ci, et que l'élément élastique s'appuie d'un côté sur le tube terminal et de l'autre côté sur l'élément en forme de tube ou de barre, ou sur une section terminale (66) partant de celui-ci.

7. Système de mesure selon au moins la revendication 5,
**caractérisé en ce**
**que** pour modifier sa longueur, l'élément de calage tel qu'un élément en forme de tube ou de barre (62) peut être pivoté par rapport au tube extérieur (40).

8. Système de mesure selon au moins l'une des revendications précédentes,
**caractérisé en ce**
**que** le boîtier (14) de l'appareil de mesure (12) présente un logement (68, 168) en forme de goulette ou de conduit pour une section de la barre de fixation (42) et situé sur son côté extérieur et s'étendant dans le sens longitudinal du boîtier, sachant qu'en particulier du boîtier (14) partent deux sections (74, 76) faisant saillie dans le sens radial et distantes l'une de l'autre avec des surfaces de délimitation (78, 80) parallèles ou approximativement parallèles et se faisant face, qui se fondent en affleurant ou en affleurant pour l'essentiel dans l'évidement (72) en forme de goulotte.

9. Système de mesure selon au moins l'une des revendications précédentes,
**caractérisé en ce**
**que** les surfaces de délimitation (78, 80) et l'évidement (72) en forme de goulotte constituent un logement (68) en forme de conduit pour une section de la barre de fixation (42), et que d'une des sections (74) s'étendant dans le sens radial part un élément de calage (70) pivotant qui, en fonction de sa position obture ou dégage du côté de l'ouverture le logement (68) en forme de conduit, sachant qu'en particulier l'élément de calage (70) est un élément cintré tel qu'une section de paroi de cylindre creux, et peut être pivoté autour d'un axe parallèle à l'axe longitudinal du boîtier (14) et s'étendant dans la zone du logement (68) en forme de conduit et/ou que l'élément de calage (70) est soumis à une force par un élément élastique dans la position obturant le logement (68) en forme de conduit.

10. Système de mesure selon au moins l'une des revendications précédentes,
**caractérisé en ce**
**que** de l'élément de calage (70) sort une prise telle qu'une poignée (82), qui traverse en s'étendant vers l'extérieur la section (74) du boîtier (14) faisant saillie dans le sens radial et recevant et guidant l'élément de calage, sachant qu'en particulier la prise (82) s'étend à l'intérieur d'un évidement (84) en forme de fenêtre de la section (74) et peut être pivotée à l'intérieur de celui-ci.

11. Système de mesure selon au moins l'une des revendications précédentes,
**caractérisé en ce**
**que** des délimitations du logement (168) en forme de goulotte partent des éléments de calage (182, 184) tels que des mâchoires et soumis à une force de ressort et réglables vers l'intérieur, qui peuvent être de préférence fixés dans leur position en particulier par des éléments de fixation tels que des leviers (200, 202) s'engageant dans une denture (196, 198) telle qu'une denture hélicoïdale.

12. Système de mesure selon au moins l'une des revendications précédentes,
**caractérisé en ce**
**que** le boîtier (14) peut être fixé dans la position souhaitée à la barre de fixation par un élément de calage tel qu'une pince élastique ou un élément de serrage par vis sur la barre de fixation (42), ou par un adaptateur distinct.
